# FASCICULE DE BREVET EUROPEEN

(11) **EP 1 076 612 B1**
(45) Date de publication et mention de la délivrance du brevet: **19.06.2002**
(21) Numéro de dépôt: 99923466.9
(22) Date de dépôt: 27.04.1999
(51) Int. Cl.: B60C 9/08, B60C 9/04, B60C 9/12

(54) **PNEUMATIQUE A ARMATURE DE CARCASSE A DEUX RIGIDITES**
REIFEN MIT EINER KARKASSENBEWEHRUNG MIT ZWEI STEIFIGKEITEN
TYRE WITH BODY PLY REINFORCEMENT HAVING TWO RIGIDITY LEVELS

(30) Priorité: 06.05.1998 FR 9805870
(43) Date de publication de la demande: 21.02.2001
(73) Titulaire: Compagnie Générale des Etablissements MICHELIN-MICHELIN & CIE, 63040 Clermont-Ferrand Cedex 09 (FR)
(72) Inventeur: MOREL, Noel, F-63530 Enval (FR)
(74) Mandataire: Le Cam, Stéphane
(86) Numéro de dépôt international: EP9902816
(87) Numéro de publication internationale: WO9956974

(56) Documents cités:
- DE-A- 1 921 750
- FR-A- 1 111 805
- FR-A- 1 111 806
- FR-A- 1 425 801
- US-A- 3 844 327
- US-A- 4 185 675

## Description

L'invention concerne un pneumatique à armature de carcasse radiale, surmontée radialement d'une armature de sommet composée d'au moins deux nappes de travail formées d'éléments de renforcement, parallèles entre eux dans chaque nappe et croisés d'une nappe à la suivante en faisant avec la direction circonférentielle des angles de faible valeur absolue comprise entre 10° et 45°.

Dans un pneumatique de l'état de la technique actuel, l'armature de carcasse est formée d'au moins une nappe d'éléments de renforcement radiaux ou dits radiaux, c'est-à-dire des éléments faisant avec la direction circonférentielle un angle de 90° à plus ou moins 10°. Lesdits éléments de renforcement sont, soit des câbles en textile, ce qui est généralement le cas dans les pneumatiques pour véhicules de Tourisme. pour avions ou pour engins agricoles. avec une ou plusieurs nappes de carcasse, soit des câbles métalliques dans les cas de pneumatiques pour véhicules lourds routiers ou pour engins de Génie Civil, avec généralement une seule nappe de carcasse. Les dits éléments sont continus de tringle à tringle et ancrés dans chaque bourrelet à ladite tringle pour former deux retournements de carcasse.

Lors de la fabrication du pneumatique, la ou les nappe(s) d'armature de carcasse, qu'elle(s) soit(ent) en textile ou en métal comme l'acier, sont, dans un premier temps, posées sur un tambour cylindrique pour être ensuite conformées sous forme d'ébauche torique avant d'être radialement coiffée d'une armature de sommet. Lors du moulage dans le moule de la presse de vulcanisation, l'ébauche torique de pneumatique ainsi obtenue subit alors un supplément de conformation.

Dans le cas de pneumatique à armature de carcasse métallique, dont les éléments de renforcement sont inextensibles, c'est-à-dire présentant un très faible allongement sous une force de tension égale à 10% de la force de rupture, les différentes transformations subies par les ébauches non vulcanisées de carcasse et de pneumatique provoquent un phénomène dit de fluage des couches intérieures de mélange caoutchouteux, plus particulièrement dans la région des épaules du pneumatique, phénomène de fluage qui est variable circonférentiellement en importance et qui est ou peut être un facteur important dans le manque d'endurance de l'armature de carcasse du pneumatique. Dans le cas de pneumatique à armature de carcasse radiale composée d'éléments de renforcement en matériau textile ou plastique thermocontractable, la vulcanisation dudit pneumatique conduit au même phénomène de fluage des couches intérieures.

Une solution évidente pour résoudre de tels problèmes consisterait à augmenter fortement les épaisseurs de couches intérieures, mais une telle solution n'est pas. de manière tout aussi évidente, optimale tant du point de vue propriétés du pneumatique (les surépaisseurs entraînent un échauffement supplémentaire à l'épaule, une résistance au roulement accrue ...etc...) que coût de fabrication.

Le brevet FR 1 111 805 de la demanderesse décrit une armature de carcasse à deux parties distinctes, qui se chevauchent dans la région du plan équatorial du pneumatique. Cette façon de disposer la ou les nappes d'armature de carcasse présente des avantages du point de vue technique, tant en ce qui concerne la facilité de fabrication qu'en ce qui concerne la souplesse du pneumatique.

Le brevet FR 1 111 806 prévoit le même arrangement de deux parties d'armature de carcasse radiale pour suppléer la défaillance de la nappe de triangulation située radialement au dessus des nappes de sommet de travail.

Le brevet FR 1 425 801 reconnaît que cette disposition de couches de nappes de carcasse non continues, mais superposées dans la partie équatoriale du pneumatique, non seulement permet le renforcement désirable sous la bande de roulement mais aussi d'obtenir la possibilité d'un meilleur équilibrage des forces lors de la conformation de l'ébauche non vulcanisée, car le recouvrement dans la partie équatoriale du pneumatique autorise certains mouvements relatifs des organes de résistance avant la vulcanisation.

De tels mouvements sont insuffisants pour éviter le phénomène de fluage des couches internes à travers les câbles d'armature de carcasse, car la largeur de contact entre les deux parties qui se chevauchent, chevauchement nécessaire pour qu'il y ait ancrage par cisaillement des deux parties, est trop importante, car généralement sensiblement égale à la largeur de l'armature de sommet. En outre, la superposition radiale de plusieurs couches de carcasse sous l'armature de sommet influe sur la flexion méridienne de l'ensemble armature de carcasse - armature de sommet, et en particulier sur la position de l'axe neutre de flexion, ce qui n'est pas toujours souhaitable.

DE 1 921 750 montre un pneumatique comprenant les caractéristiques du préambule de la revendication 1.

L'invention propose une autre solution qui consiste à subdiviser en trois parties l'armature de carcasse continue de tringle à tringle, et à conférer à la partie de l'armature de carcasse. disposée sous l'armature de sommet une élasticité plus grande que l'élasticité des parties d'armature qui renforcent les flancs du pneumatique, élasticité plus grande due à l'utilisation d'éléments de renforcement coupés.

Conformément à l'invention, un pneumatique comportant une armature de carcasse, composée d'au moins une nappe d'éléments de renforcement ancrée dans chaque bourrelet à au moins une tringle, ladite armature de carcasse étant radialement surmontée d'une armature de sommet composée d'au moins deux nappes de travail formées d'éléments de renforcement croisés d'une nappe à la suivante en faisant avec la direction circonférentielle des angles compris entre 10° et 45°, est caractérisé en ce que la partie d'armature de carcasse, disposée sous l'armature de sommet, centrée sur le plan équatorial et ayant une largeur axiale comprise entre 0,4 et 1 fois la largeur de la nappe de sommet de travail la plus large, est formée d'éléments de renforcement coupés.

La solution préférentielle consiste en ce que chaque élément de renforcement de la partie d'armature de carcasse de largeur, comprise entre 0,4 et 1 fois la largeur axiale de la nappe de sommet de travail la plus large, soit coupé au moins une fois.

Avantageusement, ladite partie sous armature de sommet présente, à l'état non vulcanisé, une rigidité linéique d'extension par unité de largeur comprise entre 0,1 et 0,7 fois la rigidité linéique d'extension de chaque partie de la même armature de carcasse renforçant le flanc du pneumatique, de sorte que ledit rapport des rigidités linéiques devienne compris entre 0,2 et 1 lorsque le pneumatique est vulcanisé.

Une rigidité, avant vulcanisation, de la partie sous sommet inférieure à 0,1 fois la rigidité de la partie flanc ne permet pas d'assurer la stabilité géométrique de l'ébauche de carcasse crue et ne permet pas à l'état vulcanisé une tension suffisante sous l'effet de la pression de gonflage pour assurer une triangulation de l'armature de sommet satisfaisante. Une rigidité linéique supérieure à 0,7 fois la rigidité d'une partie flanc ne permet pas d'éviter le fluage des couches internes de caoutchouc.

La rigidité linéique d'extension résulte de la force de traction exercée sur une bande de largeur unité de l'armature de carcasse pour obtenir un allongement relatif ε de 0,5%. Elle peut s'exprimer par la formule R = dF/dε où R est la rigidité linéique, et dF/dε la dérivée de la force par unité de largeur par rapport à l'allongement relatif ε. Lorsqu'il s'agit de la rigidité linéique à l'état non vulcanisé, elle est mesurée sur une bande de produit semi-fini qu'est l'armature de carcasse non vulcanisée. Lorsqu'il s'agit de la rigidité linéique à l'état vulcanisé, elle est mesurée sur une bande de largeur unité prélevée sur le pneumatique vulcanisé.

Quelle que soit la solution adoptée pour obtenir de tels rapports de rigidités linéiques, la tension des éléments de renforcement de l'armature de carcasse dans les flancs du pneumatique deviendra pratiquement constante sur toute la circonférence du pneumatique. Outre que le problème de fluage de couches intérieures à la base de l'invention est résolu, la solution des éléments de renforcement coupés permet à l'armature de carcasse de conserver partiellement son rôle d'armature de triangulation, les éléments coupés présentant une certaine résistance aux efforts de compression. Solution la plus fiable et la moins coûteuse industriellement, elle présente aussi un certain nombre d'avantages importants, tel que l'obtention d'une meilleure uniformité, en particulier une diminution nette de l'amplitude de la variation radiale quelle que soit l'harmonique considérée, d'où une amélioration du confort, ou tel que l'atténuation des déformations des parois extérieures de flancs, déformations visibles à l'oeil et conférant au pneumatique un aspect extérieur défaillant.

Les caractéristiques de l'invention seront mieux comprises à l'aide de la description qui suit et qui se réfère au dessin illustrant à titre non limitatif des exemples d'exécution, et sur lequel :
- la figure 1 représente schématiquement, vue en section méridienne, une première variante préférentielle de pneumatique conforme à l'invention,
- la figure 2 représente, vue en plan, l'armature de carcasse du pneumatique de la figure 1,
- la figure 3 représente schématiquement, vue en plan, une deuxième variante d'armature de carcasse,
- la figure 4 représente, vue en plan, une armature de carcasse formée de deux nappes, conformes à l'invention.

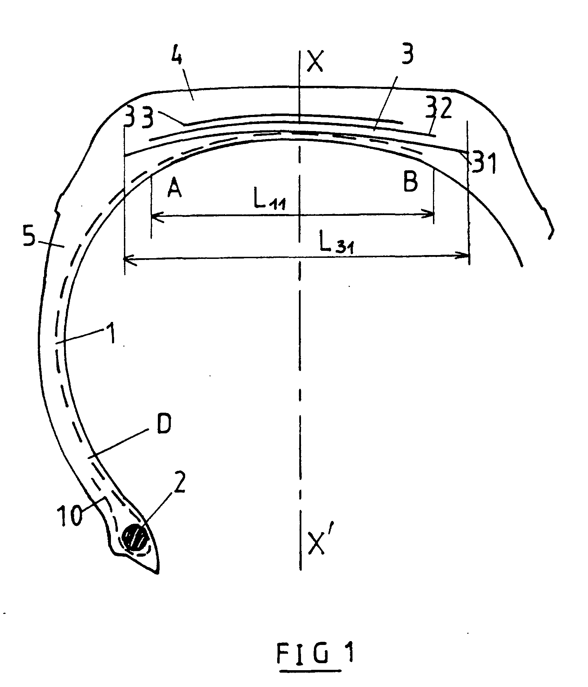

Le pneumatique P, montré sur la figure 1, comprend une armature de carcasse composée d'une seule nappe de carcasse (1) formée d'éléments de renforcement, qui sont des câbles de polyester radiaux. Ladite nappe (1) est ancrée dans chaque bourrelet à une tringle (2) pour former un retournement (10). Ladite nappe de carcasse (1) est, dans sa partie centrale, de part et d'autre du plan équatorial XX', surmontée radialement d'une armature de sommet (3) composée, dans le cas décrit, d'une part de deux nappes de travail (31) et (32) formées de câbles métalliques inextensibles en acier, parallèles entre eux dans chaque nappe et croisés d'une nappe (31) à la suivante (32) en faisant avec la direction circonférentielle un angle α de 22°, et d'autre part d'une nappe dite de protection (33) formée de câbles circonférentiels en polyamide aliphatique, faisant avec la direction circonférentielle un angle β. compris dans l'intervalle -5°, +5° par rapport à la direction circonférentielle. Le pneumatique P est complété par une bande de roulement (4), réunie aux bourrelets par deux flancs (5), et par les différents mélanges de caoutchouc connus et usuellement utilisés tels la couche intérieure, les différents bourrages au dessus et autour des tringles d'ancrage, la couche de protection des bourrelets .... etc ....

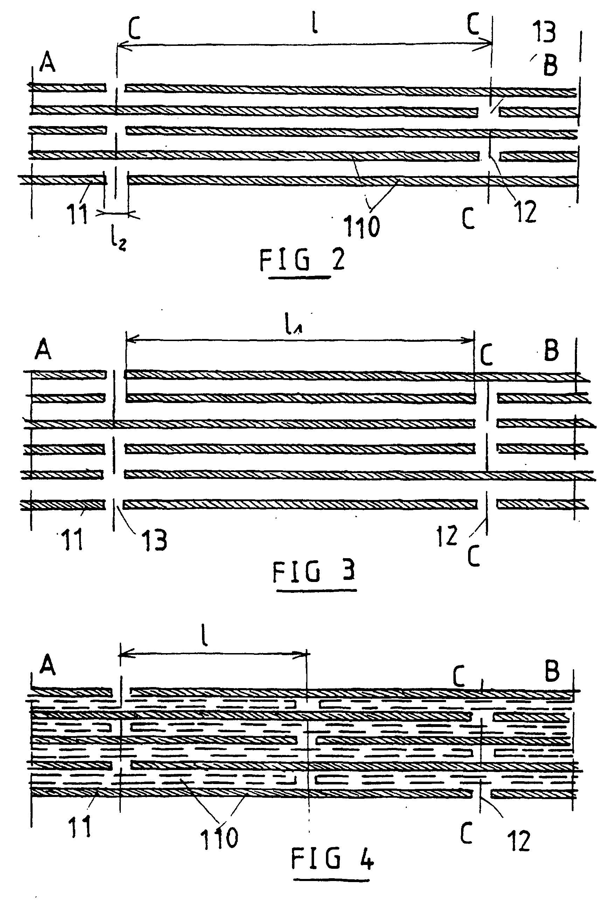

La nappe de travail (31), la plus proche de la nappe de carcasse (1), est la plus large axialement et sa largeur axiale L₃₁ est égale à 140 mm. La partie AB de la nappe de carcasse (1), disposée sous l'armature de sommet de part et d'autre du plan équatorial XX', a une largeur axiale L₁₁ égale à 130 mm, soit 0,93 fois la largeur L₃₁. Les câbles (11) de la partie AB de la nappe de carcasse, à l'état non vulcanisé (figure 2). comportent une coupure (12) par câble, les coupures étant décalées entre deux câbles (11) circonférentiellement adjacents pour former une largeur 1 entre coupures (12) de câbles adjacents. égale, dans le cas décrit, à 0,4 fois la largeur L₃₁ soit 56 mm. les coupures étant considérées comme réalisées au centre de l'espacement (13) existant entre deux tronçons (110) de câbles. La largeur l₁ de chevauchement entre câbles est évidemment fonction de la largeur l₂ d'espacement (13) entre extrémités de deux tronçons (110) de câbles (11) et est, dans le cas décrit, égale à 55 mm, ce qui permet d'obtenir, pour une bande AB de largeur unité, une rigidité linéique, à l'état non vulcanisé, égale à 0,5 fois la rigidité linéique, à l'état non vulcanisé, d'une bande AD de même longueur de nappe de carcasse renforçant le flanc et formée des mêmes câbles (11), mais non coupés, alors que la rigidité linéique de ladite bande AB, à l'état vulcanisé, est égale à 0,6 fois la rigidité linéique dans le même état de la bande AD de flanc.

Si les lignes de coupures CC sont, comme montrées sur la figure 2, distantes axialement d'une quantité 1 égale à 0,4 fois la largeur L₃₁, il en est pas moins certain que la distance entre les dites lignes CC peut être comprise entre 0,28 et 0,7 fois la largeur L₃₁ sans sortir du cadre de l'invention.

La partie AB de nappe de carcasse (1), montrée sur la figure 3, diffère de la partie AB de la figure 2 par la disposition des coupures (12). En effet, un câble (11) sur deux présente deux coupures (12) distantes de la largeur 1, égale à 0,4 fois la largeur L₃₁, une des coupures (12) étant dans le prolongement circonférentiel de la coupure (12) d'un des deux câbles (11) circonférentiellement adjacents, alors que l'autre coupure (12) est dans le prolongement circonférentiel de la coupure (12) de l'autre câble (11) circonférentiellement adjacent. Les lignes de coupures CC ainsi formées restent distantes de la quantité 1. Ladite disposition permet une meilleure maîtrise du procédé de coupe des câbles de renforcement, en permettant d'être assuré que le nombre de coupures est suffisant.

La figure 4 montre une disposition de coupures (12) de câbles (11) formant deux nappes (1) d'armature de carcasse pour pneumatique radial, les lignes de coupures étant distantes d'une quantité 1 égale 0,2 fois la largeur L₃₁, comme il apparaît clairement sur ladite figure 4. Les longueurs de chevauchement entre câbles d'une nappe sont, comme montrées, préférentiellement égales aux longueurs de chevauchement entre câbles de l'autre nappe.

Ladite nappe de carcasse, avec câbles coupés dans la partie AB, est, comme usuellement, préparée par assemblage des câbles et de leur calandrage de mélange caoutchouteux, puis découpée pour obtenir la longueur méridienne souhaitée. La nappe ainsi préparée et coupée est posée sur une table où un dispositif pourvu de plusieurs couteaux tranchants peut se mouvoir verticalement et venir frapper et couper les câbles, les dits couteaux étant préalablement réglés en espacement longitudinal et transversal de manière à ce que les coupures soient réalisées aux endroits voulus.

## Revendications

1. Pneumatique P comportant une armature de carcasse, composée d'au moins une nappe (1) d'éléments de renforcement (11) et ancrée dans chaque bourrelet à au moins une tringle (2), ladite armature de carcasse étant radialement surmontée d'une armature de sommet (3) composée d'au moins deux nappes de travail (31, 32) formées d'éléments de renforcement croisés d'une nappe à la suivante en faisant avec la direction circonférentielle des angles compris entre 10° et 45°, est **caractérisé en ce que** la partie AB d'armature de carcasse, disposée sous l'armature de sommet (3), centrée sur le plan équatorial XX' et ayant une largeur axiale L₁₁ comprise entre 0,4 et 1 fois la largeur L₃₁ de la nappe de sommet de travail (31) la plus large est formée d'éléments de renforcement (11) coupés.

2. Pneumatique selon la revendication 1, **caractérisé en ce que** chaque élément de renforcement (11) de la partie AB d'armature de carcasse (1) est coupé au moins une fois.

3. Pneumatique selon la revendication 1, **caractérisé en ce que** la partie AB d'armature de carcasse (1), présente, à l'état non vulcanisé, une rigidité linéique d'extension par unité de largeur comprise entre 0,1 et 0,7 fois la rigidité linéique d'extension de chaque partie AD de la même armature de carcasse (1) renforçant le flanc (5) du pneumatique P, de sorte que ledit rapport des rigidités linéiques devienne compris entre 0,2 et 1 lorsque le pneumatique P est vulcanisé.

4. Pneumatique selon la revendication 1, **caractérisé en ce que** les coupures (12) entre tronçons (110) sont décalées entre deux éléments de renforcement (11) circonférentiellement adjacents pour former des lignes de coupures CC distantes axialement d'une quantité 1 comprise entre 0,28 et 0,7 fois la largeur L₃₁.

5. Pneumatique selon la revendication 1, **caractérisé en ce qu'**un élément de renforcement (11) sur deux éléments circonférentiellement adjacents présente deux coupures (12), une des coupures (12) étant dans le prolongement circonférentiel de la coupure (12) d'un des deux éléments (11) circonférentiellement adjacents, alors que l'autre coupure (12) étant dans le prolongement circonférentiel de la coupure (12) de l'autre élément (11) circonférentiellement adjacent, les lignes de coupures CC ainsi formées étant distantes axialement d'une quantité 1 comprise entre 0.28 et 0,7 fois la largeur L₃₁.

## Patentansprüche

1. Reifen P mit einer Karkassenbewehrung, die aus mindestens einer Lage (1) aus Verstärkungselementen (11) zusammengesetzt ist, die in jedem Wulst an mindestens einem Wulstkern (2) verankert ist, wobei radial über der genannten Karkassenbewehrung eine Scheitelbewehrung (3) angebracht ist, die aus mindestens zwei Arbeitslagen (31, 32) zusammengesetzt ist, die aus Verstärkungselementen gebildet sind, die von einer Lage zur folgenden unter Bildung von Winkeln zur Umfangsrichtung überkreuz laufen, die zwischen 10° und 45° liegen, **dadurch gekennzeichnet, daß** der Teil AB der Karkässenbewehrung der unter der Scheitelbewehrung (3) angeordnet ist, die auf die Äquatorialebene XX' zentriert ist, und eine axiale Breite L₁₁ hat, die zwischen dem 0,4- und 1-fachen der Breite L₃₁ der breitesten Scheitel-Arbeitslage (31) liegt, aus zugeschnittenen Verstärkungselementen (11) gebildet ist.

2. Reifen nach Anspruch 1, **dadurch gekennzeichnet, daß** jedes Verstärkungselement (11) des Teils AB der Karkassenbewehrung (1) mindestens einmal durchschnitten ist.

3. Reifen nach Anspruch 1, **dadurch gekennzeichnet, daß** der Teil AB der Karkassenbewehrung (1) in nicht-vulkanisiertem Zustand eine lineare Dehnungssteifigkeit pro Breiteneinheit aufweist, die zwischen dem 0,1- und 0,7-fachen der linearen Dehnungssteifigkeit eines jeden Teils AD der selben Karkassenbewehrung (1) liegt, die die Flanke (5) des Reifens P verstärkt, und zwar derart, daß das genannte Verhältnis der linearen Steifigkeiten dann, wenn der Reifen P vulkanisiert wird, zu einem Wert zwischen 0,2 und 1 wird.

4. Reifen nach Anspruch 1, **dadurch gekennzeichnet, daß** die Schnittstellen (12) zwischen den Stücken (110) zwischen zwei Verstärkungselementen (11) versetzt sind, die in Umfangsrichtung benachbart sind, um Schnittlinien CC zu bilden, die voneinander axial um eine Strecke 1 beabstandet sind, die zwischen dem 0,28- und dem 0,7-fachen der Breite L₃₁ beträgt.

5. Reifen nach Anspruch 1, **dadurch gekennzeichnet, daß** ein Verstärkungselement (11) unter zwei benachbarten Umfangselementen zwei Schnittstellen (12) aufweist, wobei eine der Schnittstellen (12) in der Umfangs-Verlängerung der Schnittstelle (12) des einen der beiden Elemente (11) liegt, die in Umfangsrichtung benachbart sind, während die andere Schnittstelle (12) in der Umfangsverlängerung der Schnittstelle (12) des anderen der in Umfangsrichtung benachbarten Elemente (11) liegt, so daß die so gebildeten Schnittlinien CC axial um einen Betrag 1 beabstandet sind, der zwischen dem 0,28-fachen und dem 0,7-fachen der Breite L₃₁ liegt.

## Claims

1. Tyre P comprising a carcass reinforcement consisting of at least one ply (1) *of* reinforcement elements (11) anchored in each bead to at least one bead-wire (2), the said carcass reinforcement being radially covered by a crown reinforcement (3) consisting of at least two working plies (31, 32) formed of reinforcement elements crossed over from one ply to the next and making angles of between 10° and 45° with respect to the circumferential direction,
**characterised in that**
the portion AB of the carcass reinforcement positioned under the crown reinforcement (3), centred on the equatorial plane XX' and having axial width L₁₁ between 0.4 and 1 times the width L₃₁ of the widest working crown ply (31), is formed of cut reinforcement elements (11).

2. Tyre according to Claim 1,
**characterised in that**
each reinforcement element (11) in the portion AB of the carcass reinforcement (1) is cut at least once.

3. Tyre according to Claim 1,
**characterised in that**
the portion AB of the carcass reinforcement (1) has, in the unvulcanised condition, a linear tensile rigidity per unit width between 0.1 and 0.7 times the linear tensile rigidity of each portion AD of the same carcass reinforcement (1) that reinforces the sidewall (5) of the tyre P, such that the said ratio between the linear rigidities becomes between 0.2 and 1 when the tyre P is vulcanised.

4. Tyre according to Claim 1,
**characterised in that**
the cuts (12) between sections (110) are staggered between two circumferentially adjacent reinforcement elements(11) to form lines of cuts CC axially separated by an amount 1 between 0.28 and 0.7 times the width L₃₁.

5. Tyre according to Claim 1,
**characterised in that**
one reinforcement element (11) out of every two circumferentially adjacent elements has two cuts (12), one of the cuts (12) being in the circumferential extension of the cut (12) of one of the two circumferentially adjacent elements (11), while the other cut (12) is in the circumferential extension of the cut (12) in the other circumferentially adjacent element (11), the lines of cuts CC so formed being axially separated by an amount 1 between 0.28 and 0.7 times the width L₃₁.
